# EUROPEAN PATENT APPLICATION

(11) **EP 4 478 683 A1**
(43) Date of publication of application: **18.12.2024**
(21) Application number: 22926224.1
(22) Date of filing: 22.12.2022
(51) Int. Cl.: H04L 67/12, G06N 20/00

(54) **METHOD AND DEVICE FOR CALIBRATING DEVICE BY USING MACHINE LEARNING IN M2M SYSTEM**

(30) Priority: 08.02.2022 US 202263307794 P
(71) Applicant: Hyundai Motor Company, Seoul 06797 (KR); Kia Corporation, Seocho-gu Seoul 06797 (KR); INDUSTRY ACADEMY COOPERATION FOUNDATION OF SEJONG UNIVERSITY, Seoul 05006 (KR)
(72) Inventor: SONG, Jae Seung, Seoul 05006 (KR)
(74) Representative: Viering, Jentschura & Partner mbB Patent- und Rechtsanwälte
(86) International application number: PCT/KR2022/021035
(87) International publication number: WO 2023/153627

(57) **Abstract**

The present disclosure relates to calibrating a device by using machine learning in a machine-to-machine (M2M) system, and a method for calibrating an Internet of Things (IoT) device in an M2M system may include receiving a measured value from at least one reference device, performing machine learning by using the measured value, storing an output value of the machine learning, and transmitting the output value to an IoT device for IoT device calibration.

## Description

### TECHNICAL FIELD

The present disclosure relates to a machine-to-machine (M2M) system, and more particularly, to a method and apparatus for calibrating an Internet of Things (IoT) device by using machine learning in an M2M system.

### BACKGROUND ART

Recently, Machine-to-Machine (M2M) systems have been introduced in different applications. An M2M communication may refer to a communication performed between machines without human intervention. M2M includes Machine Type Communication (MTC), Internet of Things (IoT) or Device-to-Device (D2D). In the following description, the term "M2M" is uniformly used for convenience of explanation, but the present disclosure is not limited thereto. A terminal used for M2M communication may be an M2M terminal or an M2M device. An M2M terminal may generally be a device having low mobility while transmitting a small amount of data. Herein, the M2M terminal may be used in connection with an M2M server that centrally stores and manages inter-machine communication information. In addition, an M2M terminal may be applied to various systems such as object tracking, automobile linkage, and power metering.

Meanwhile, with respect to an M2M terminal, the oneM2M standardization organization provides requirements for M2M communication, things to things communication and IoT technology, and technologies for architecture, Application Program Interface (API) specifications, security solutions and interoperability. The specifications of the oneM2M standardization organization provide a framework to support a variety of applications and services such as smart cities, smart grids, connected cars, home automation, security and health.

### DISCLOSURE

### TECHNICAL PROBLEM

The present disclosure is directed to providing a method and apparatus for calibrating a device by using machine learning in a machine-to-machine (M2M) system.

The present disclosure is directed to continuously maintaining accuracy of an Internet of Things (IoT) device in an M2M system.

The present disclosure is directed to calibrating an IoT device by using a reference sensor in an M2M system.

The technical problems solved by the present disclosure are not limited to the above technical problems and other technical problems which are not described herein will be clearly understood by a person having ordinary skill in the technical field, to which the present disclosure belongs, from the following description.

### TECHNICAL SOLUTION

According to an embodiment of the present disclosure, a method for calibrating an Internet of Things (IoT) device in a machine-to-machine (M2M) system may include receiving a measured value from at least one reference device, performing machine learning by using the measured value, storing an output value of the machine learning, and transmitting the output value to an IoT device for IoT device calibration.

According to an embodiment of the present disclosure, an apparatus for calibrating an Internet of Things (IoT) device in a machine-to-machine (M2M) system may include a transceiver and a processor coupled with the transceiver, and the processor may be configured to receive a measured value from at least one reference device, to perform machine learning by using the measured value, to store an output value of the machine learning, and to transmit the output value to an IoT device for IoT device calibration.

### ADVANTAGEOUS EFFECTS

According to the present disclosure, an Internet of Things (IoT) device can be effectively calibrated using machine learning in a machine-to-machine (M2M) system. Effects obtained in the present disclosure are not limited to the above-mentioned effects, and other effects not mentioned above may be clearly understood by those skilled in the art from the following description.

### BRIEF DESCRIPTION OF THE DRAWINGS

FIG. 1 illustrates a layered structure of a machine-to-machine (M2M) system according to the present disclosure.
FIG. 2 illustrates a reference point in an M2M system according to the present disclosure.
FIG. 3 illustrates each node in an M2M system according to the present disclosure.
FIG. 4 illustrates a common service function in an M2M system according to the present disclosure.
FIG. 5 illustrates a method in which an originator and a receiver exchange a message in an M2M system according to the present disclosure.
FIG. 6 illustrates a platform for calibration of an Internet of Things (IoT) device in an M2M system according to the present disclosure.
FIG. 7 illustrates resources necessary for calibration of an IoT device in an M2M system according to the present disclosure.
FIG. 8 illustrates an example of a procedure for performing calibration for a device in an M2M system according to the present disclosure.
FIG. 9 illustrates an example of a procedure for performing calibration by an IoT device in an M2M system according to the present disclosure.
FIG. 10 illustrates an example of a calibration procedure using machine learning in an M2M system according to the present disclosure.
FIG. 11 illustrates a configuration of an M2M device in an M2M system according to the present disclosure.

### MODE FOR INVENTION

Hereinafter, embodiments of the present disclosure will be described in detail with reference to the accompanying drawings, which will be easily implemented by those skilled in the art. However, the present disclosure may be embodied in many different forms and is not limited to the exemplary embodiments described herein.

In the present disclosure, the terms first, second, etc. are used only for the purpose of distinguishing one component from another, and do not limit the order or importance of components, etc. unless specifically stated otherwise. Thus, within the scope of this disclosure, a first component in one embodiment may be referred to as a second component in another embodiment, and similarly a second component in one embodiment may be referred to as a first component.

In the present disclosure, when a component is referred to as being "linked", "coupled", or "connected" to another component, it is understood that not only a direct connection relationship but also an indirect connection relationship through an intermediate component may also be included. Also, when a component is referred to as "comprising" or "having" another component, it may mean further inclusion of another component not the exclusion thereof, unless explicitly described to the contrary.

In the present disclosure, components that are distinguished from each other are intended to clearly illustrate each feature. However, it does not necessarily mean that the components are separate. In other words, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. Also, exemplary embodiments that include other components in addition to the components described in the various exemplary embodiments are also included in the scope of the present disclosure.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor and is specifically programmed to execute the processes described herein. The memory is configured to store the modules and the processor is specifically configured to execute said modules to perform one or more processes which are described further below.

In addition, the present specification describes a network based on Machine-to-Machine (M2M) communication, and a work in M2M communication network may be performed in a process of network control and data transmission in a system managing the communication network. In the present specification, an M2M terminal may be a terminal performing M2M communication. However, in consideration of backward compatibility, it may be a terminal operating in a wireless communication system. In other words, an M2M terminal may refer to a terminal operating based on M2M communication network but is not limited thereto. An M2M terminal may operate based on another wireless communication network and is not limited to the exemplary embodiment described above.

In addition, an M2M terminal may be fixed or have mobility. An M2M server refers to a server for M2M communication and may be a fixed station or a mobile station. In the present specification, an entity may refer to hardware like M2M device, M2M gateway and M2M server. In addition, for example, an entity may be used to refer to software configuration in a layered structure of M2M system and is not limited to the embodiment described above.

In addition, for example, the present disclosure mainly describes an M2M system but is not solely applied thereto. In addition, an M2M server may be a server that performs communication with an M2M terminal or another M2M server. In addition, an M2M gateway may be a connection point between an M2M terminal and an M2M server. For example, when an M2M terminal and an M2M server have different networks, the M2M terminal and the M2M server may be connected to each other through an M2M gateway. Herein, for example, both an M2M gateway and an M2M server may be M2M terminals and are not limited to the embodiment described above.

The present disclosure relates to a method and device for calibrating an Internet of Things (IoT) device by using machine learning in a machine-to-machine (M2M) system. More particularly, the present disclosure may calibrate an IoT device by using values of nearby sensors of an IoT sensor as input data of machine learning in an M2M system.

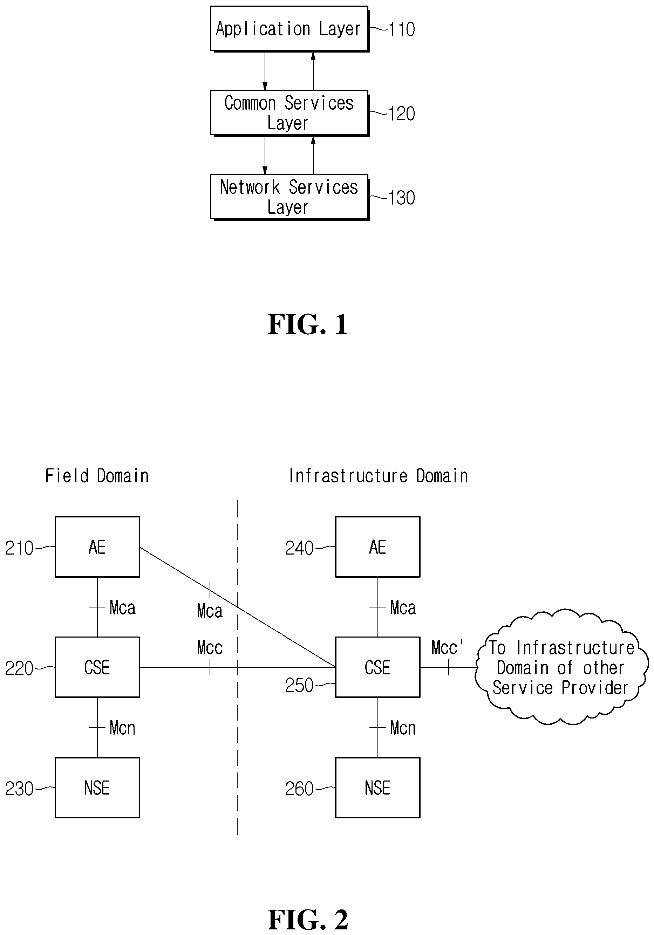

oneM2M is a de facto standards organization that was founded to develop a communal IoT service platform sharing and integrating application service infrastructure (platform) environments beyond fragmented service platform development structures limited to separate industries like energy, transportation, national defense and public service.oneM2M aims to render requirements for things to things communication and IoT technology, architectures, Application Program Interface (API) specifications, security solutions and interoperability. For example, the specifications of oneM2M provide a framework to support a variety of applications and services such as smart cities, smart grids, connected cars, home automation, security and health. In this regard, oneM2M has developed a set of standards defining a single horizontal platform for data exchange and sharing among all the applications. Applications across different industrial sections may also be considered by oneM2M. Like an operating system, oneM2M provides a framework connecting different technologies, thereby creating distributed software layers facilitating unification. Distributed software layers are implemented in a common services layer between M2M applications and communication Hardware/Software (HW/SW) rendering data transmission. For example, a common services layer may be a part of a layered structure illustrated in FIG. 1.

FIG. 1 is a view illustrating a layered structure of a Machine-to-Machine (M2M) system according to the present disclosure. Referring to FIG. 1, a layered structure of an M2M system may include an application layer 110, a common services layer 120 and a network services layer 130. Herein, the application layer 110 may be a layer operating based on a specific application. For example, an application may be a fleet tracking application, a remote blood sugar monitoring application, a power metering application or a controlling application. In other words, an application layer may be a layer for a specific application. Herein, an entity operating based on an application layer may be an application entity (AE).

The common services layer 120 may be a layer for a common service function (CSF). For example, the common services layer 120 may be a layer for providing common services like data management, device management, M2M service subscription management and location service. For example, an entity operating based on the common services layer 120 may be a common service entity (CSE).

The common services layer 120 may provide a set of services that are grouped into CSFs according to functions. A multiplicity of instantiated CSFs constitutes CSEs. CSEs may interface with applications (for example, application entities or AEs in the terminology of oneM2M), other CSEs and base networks (for example, network service entities or NSEs in the terminology of oneM2M). The network services layer 130 may provide the common services layer 120 with services such as device management, location service and device triggering. Herein, an entity operating based on the network layer 120 may be a network service entity (NSE).

FIG. 2 is a view illustrating reference points in an M2M system according to the present disclosure. Referring to FIG. 2, an M2M system structure may be distinguished into a field domain and an infrastructure domain. Herein, in each domain, each of the entities may perform communication through a reference point (for example, Mca or Mcc). For example, a reference point may indicate a communication flow between each entity. In particular, referring to FIG. 2, the reference point Mca between AE 210 or 240 and CSE 220 or 250, the reference point Mcc between different CSEs and Mcn reference point between CSE 220 or 250 and NSE 230 or 260 may be set.

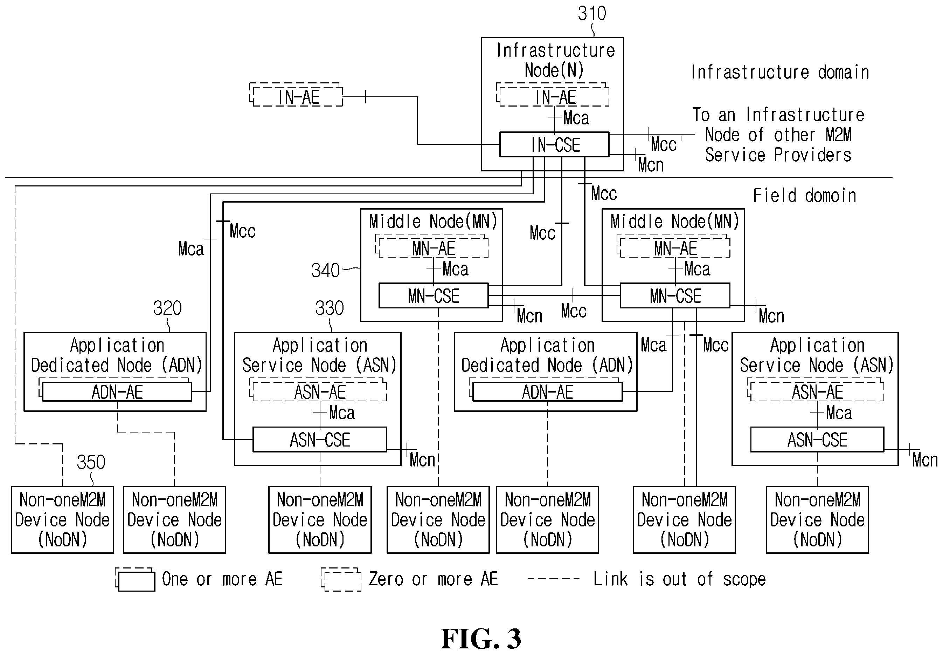

FIG. 3 is a view illustrating each node in an M2M system according to the present disclosure. Referring to FIG. 3, an infrastructure domain of a specific M2M service provider may provide a specific infrastructure node (IN) 310. Herein, the CSE of the IN may be configured to perform communication based on the AE and the reference point Mca of another infrastructure node. In particular, one IN may be set for each M2M service provider. In other words, the IN may be a node that performs communication with the M2M terminal of another infrastructure based on an infrastructure structure. In addition, for example, conceptually, a node may be a logical entity or a software configuration.

Next, an application dedicated node (ADN) 320 may be a node including at least one AE but not CSE. In particular, an ADN may be set in the field domain. In other words, an ADN may be a dedicated node for AE. For example, an ADN may be a node that is set in an M2M terminal in hardware. In addition, the application service node (ASN) 330 may be a node including one CSE and at least one AE. ASN may be set in the field domain. In other words, it may be a node including AE and CSE. In particular, an ASN may be a node connected to an IN. For example, an ASN may be a node that is set in an M2M terminal in hardware.

In addition, a middle node (MN) 340 may be a node including a CSE and including zero or more AEs. In particular, the MN may be set in the field domain. An MN may be connected to another MN or IN based on a reference point. In addition, for example, an MN may be set in an M2M gateway in hardware. As an example, a non-M2M terminal node 350 (Non-M2M device node, NoDN) is a node that does not include M2M entities. It may be a node that performs management or collaboration together with an M2M system.

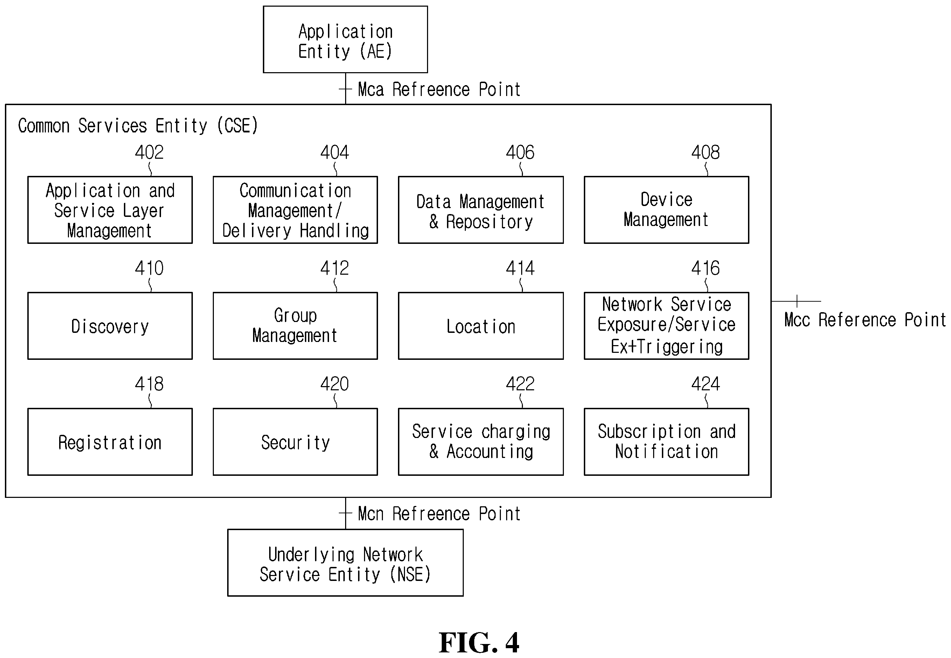

FIG. 4 is a view illustrating a common service function in an M2M system according to the present disclosure. Referring to FIG. 4, common service functions may be provided. For example, a common service entity may provide at least one or more CSFs among application and service layer management 402, communication management and delivery handling 404, data management and repository 406, device management 408, discovery 410, group management 412, location 414, network service exposure/service execution and triggering 416, registration 418, security 420, service charging and accounting 422, service session management and subscription/notification 424. At this time, M2M terminals may operate based on a common service function. In addition, a common service function may be possible in other embodiments and is not limited to the above-described exemplary embodiment.

The application and service layer management 402 CSF provides management of AEs and CSEs. The application and service layer management 402 CSF includes not only the configuring, problem solving and upgrading of CSE functions but also the capability of upgrading AEs. The communication management and delivery handling 404 CSF provides communications with other CSEs, AEs and NSEs. The communication management and delivery handling 404 CSF are configured to determine at what time and through what connection communications are to be delivered, and also determine to buffer communication requests to deliver the communications later, if necessary and permitted.

The data management and repository 406 CSF provides data storage and transmission functions (for example, data collection for aggregation, data reformatting, and data storage for analysis and sematic processing). The device management 408 CSF provides the management of device capabilities in M2M gateways and M2M devices.

The discovery 410 CSF is configured to provide an information retrieval function for applications and services based on filter criteria. The group management 412 CSF provides processing of group-related requests. The group management 412 CSF enables an M2M system to support bulk operations for many devices and applications. The location 414 CSF is configured to enable AEs to obtain geographical location information.

The network service exposure/service execution and triggering 416 CSF manages communications with base networks for access to network service functions. The registration 418 CSF is configured to provide AEs (or other remote CSEs) to a CSE. The registration 418 CSF allows AEs (or remote CSE) to use services of CSE. The security 420 CSF is configured to provide a service layer with security functions like access control including identification, authentication and permission. The service charging and accounting 422 CSF is configured to provide charging functions for a service layer. The subscription/notification 424 CSF is configured to allow subscription to an event and notifying the occurrence of the event.

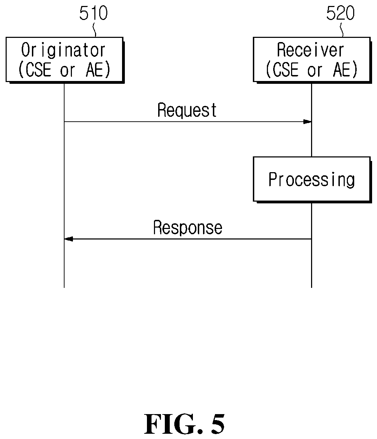

FIG. 5 is a view illustrating that an originator and a receiver exchange a message in an M2M system according to the present disclosure. Referring to FIG. 5, the originator 501 may be configured to transmit a request message to the receiver 520. In particular, the originator 510 and the receiver 520 may be the above-described M2M terminals. However, the originator 510 and the receiver 520 are not limited to M2M terminals but may be other terminals. They are not limited to the above-described exemplary embodiment. In addition, for example, the originator 510 and the receiver 520 may be nodes, entities, servers or gateways, which are described above. In other words, the originator 510 and the receiver 520 may be hardware or software configurations and are not limited to the above-described embodiment.

Herein, for example, a request message transmitted by the originator 510 may include at least one parameter. Additionally, a parameter may be a mandatory parameter or an optional parameter. For example, a parameter related to a transmission terminal, a parameter related to a receiving terminal, an identification parameter and an operation parameter may be mandatory parameters. In addition, optional parameters may be related to other types of information. In particular, a transmission terminal-related parameter may be a parameter for the originator 510. In addition, a receiving terminal-related parameter may be a parameter for the receiver 520. An identification parameter may be a parameter required for identification of each other.

Further, an operation parameter may be a parameter for distinguishing operations. For example, an operation parameter may be set to any one among Create, Retrieve, Update, Delete and Notify. In other words, the parameter may aim to distinguish operations. In response to receiving a request message from the originator 510, the receiver 520 may be configured to process the message. For example, the receiver 520 may be configured to perform an operation included in a request message. For the operation, the receiver 520 may be configured to determine whether a parameter is valid and authorized. In particular, in response to determining that a parameter is valid and authorized, the receiver 520 may be configured to check whether there is a requested resource and perform processing accordingly.

For example, in case an event occurs, the originator 510 may be configured to transmit a request message including a parameter for notification to the receiver 520. The receiver 520 may be configured to check a parameter for a notification included in a request message and may perform an operation accordingly. The receiver 520 may be configured to transmit a response message to the originator 510.

A message exchange process using a request message and a response message, as illustrated in FIG. 5, may be performed between AE and CSE based on the reference point Mca or between CSEs based on the reference point Mcc. In other words, the originator 510 may be AE or CSE, and the receiver 520 may be AE or CSE. According to an operation in a request message, such a message exchange process as illustrated in FIG. 5 may be initiated by either AE or CSE.

A request from a requestor to a receiver through the reference points Mca and Mcc may include at least one mandatory parameter and at least one optional parameter. In other words, each defined parameter may be either mandatory or optional according to a requested operation. For example, a response message may include at least one parameter among those listed in Table 1 below.

**Table 1**

| Response message parameter/success or not |
|---|
| Response Status Code - successful, unsuccessful, ack |
| Request Identifier - uniquely identifies a Request message |
| Content - to be transferred |
| To - the identifier of the Originator or the Transit CSE that sent the corresponding non-blocking request |
| From - the identifier of the Receiver |
| Originating Timestamp - when the message was built |
| Result Expiration Timestamp - when the message expires |
| Event Category - what event category shall be used for the response message |
| Content Status |
| Content Offset |
| Token Request Information |
| Assigned Token Identifiers |
| Authorization Signature Request Information |
| Release Version Indicator - the oneM2M release version that this response message conforms to |

A filter criteria condition, which can be used in a request message or a response message, may be defined as in Table 2 and Table 3 below.

**Table 2**

| Condition tag | Multiplicity | Description |
|---|---|---|
| Matching Conditions | | |
| createdBefore | 0..1 | The creationTime attribute of the matched resource is chronologically before the specified value. |
| createdAfter | 0..1 | The creationTime attribute of the matched resource is chronologically after the specified value. |
| modified Since | 0..1 | The lastModifiedTime attribute of the matched resource is chronologically after the specified value. |
| unmodified Since | 0..1 | The lastModifiedTime attribute of the matched resource is chronologically |
| | | before the specified value. |
| stateTagSmaller | 0..1 | The stateTag attribute of the matched resource is smaller than the specified value. |
| stateTagBigger | 0..1 | The stateTag attribute of the matched resource is bigger than the specified value. |
| expireBefore | 0..1 | The expirationTime attribute of the matched resource is chronologically before the specified value. |
| expire After | 0..1 | The expirationTime attribute of the matched resource is chronologically after the specified value. |
| labels | 0..1 | The labels attribute of the matched resource matches the specified value. |
| labelsQuery | 0..1 | The value is an expression for the filtering of labels attribute of resource when it is of key-value pair format. The expression is about the relationship between label-key and label-value which may include equal to or not equal to, within or not within a specified set etc. For example, label-key equals to label value, or label-key within {label-valuel, label-value2}. Details are defined in [3] |
| childLabels | 0..1 | A child of the matched resource has labels attributes matching the specified value. The evaluation is the same as for the labels attribute above. Details are defined in [3]. |
| parentLabels | 0..1 | The parent of the matched resource has labels attributes matching the specified value. The evaluation is the same as for the labels attribute above. Details are defined in [3]. |
| resource Type | 0..n | The resourceType attribute of the matched resource is the same as the specified value. It also allows differentiating between normal and announced resources. |
| childResourceType | 0..n | A child of the matched resource has the resource Type attribute the same as the specified value. |
| parentResourceType | 0..1 | The parent of the matched resource has the resourceType attribute the same as the specified value. |
| sizeAbove | 0..1 | The contentSize attribute of the <contentInstance> matched resource is equal to or greater than the specified value. |
| sizeBelow | 0..1 | The contentSize attribute of the <contentInstance> matched resource is smaller than the specified value. |
| contentType | 0..n | The contentInfo attribute of the <contentInstance> matched resource matches the specified value. |
| attribute | 0..n | This is an attribute of resource types (clause 9.6). Therefore, a real tag name is variable and depends on its usage and the value of the attribute can have wild card *. E.g. creator of container resource type can be used as a filter criteria tag as "creator=Sam", "creator=Sam*", "creator=*Sam". |
| childAttribute | 0..n | A child of the matched resource meets the condition provided. The evaluation of this condition is similar to the attribute matching condition above. |
| parent Attribute | 0..n | The parent of the matched resource meets the condition provided. The evaluation of this condition is similar to the attribute matching condition above. |
| semanticsFilter | 0..n | Both semantic resource discovery and semantic query use semanticsFilter to specify a query statement that shall be specified in the SPARQL query language [5]. When a CSE receives a RETRIEVE request including a semanticsFilter, and the Semantic Query Indicator parameter is also present in the request, the request shall be processed as a semantic query; otherwise, the request shall be processed as a semantic resource discovery. |
| | | In the case of semantic resource discovery targeting a specific resource, if the semantic description contained in the <semanticDescriptor> of a child resource matches the semanticFilter, the URI of this child resource will be included in the semantic resource discovery result. |
| | | In the case of semantic query, given a received semantic query request and its query scope, the SPARQL query statement shall be executed over aggregated semantic information collected from the semantic resource(s) in the query scope and the produced output will be the result of this semantic query. |
| | | Examples for matching semantic filters in SPARQL to semantic descriptions can be found in [i.28]. |
| filterOperation | 0..1 | Indicates the logical operation (AND/OR) to be used for different condition tags. The default value is logical AND. |
| contentFilterSyntax | 0..1 | Indicates the Identifier for syntax to be applied for content-based discovery. |
| contentFilterQuery | 0..1 | The query string shall be specified when contentFilterSyntax parameter is present. |

**Table 3**

| Condition tag | Multiplicity | Description |
|---|---|---|
| Filter Handling Conditions | | |
| filterUsage | 0..1 | Indicates how the filter criteria is used. If provided, possible values are 'discovery' and 'IPEOnDemandDiscovery'. |
| | | If this parameter is not provided, the Retrieve operation is a generic retrieve operation and the content of the child resources fitting the filter criteria is returned. |
| | | If filterUsage is 'discovery', the Retrieve operation is for resource discovery (clause 10.2.6), i.e. only the addresses of the child resources are returned. If filterUsage is 'IPEOnDemandDiscovery', the other filter conditions are sent to the IPE as well as the discovery Originator ID. When the IPE successfully generates new resources matching with the conditions, then the resource address(es) shall be returned. This value shall only be valid for the Retrieve request targeting an <AE> resource that represents the IPE. |
| limit | 0..1 | The maximum number of resources to be included in the filtering result. This may be modified by the Hosting CSE. When it is modified, then the new value shall be smaller than the suggested value by the Originator. |
| level | 0..1 | The maximum level of resource tree that the Hosting CSE shall perform the operation starting from the target resource (i.e. To parameter). This shall only be applied for Retrieve operation. The level of the target resource itself is zero and the level of the direct children of the target is one. |
| offset | 0..1 | The number of direct child and descendant resources that a Hosting CSE shall skip over and not include within a Retrieve response when processing a Retrieve request to a targeted resource. |
| applyRelativePath | 0..1 | This attribute contains a resource tree relative path (e.g.../tempContainer/LATEST). This condition applies after all the matching conditions have been used (i.e. a matching result has been obtained). The attribute determines the set of resource(s) in the final filtering result. The filtering result is computed by appending the relative path to the path(s) in the matching result. All resources whose Resource-IDs match that combined path(s) shall be returned in the filtering result. If the relative path does not represent a valid resource, the outcome is the same as if no match was found, i.e. there is no corresponding entry in the filtering result. |

A response to a request for accessing a resource through the reference points Mca and Mcc may include at least one mandatory parameter and at least one optional parameter. In other words, each defined parameter may be either mandatory or optional according to a requested operation or a mandatory response code. For example, a request message may include at least one parameter among those listed in Table 4 below.

**Table 4**

| Request message parameter | |
|---|---|
| Mandatory | Operation - operation to be executed / GREAT, Retrieve, Update, Delete, Notify |
| | To - the address of the target resource on the target CSE |
| | From - the identifier of the message Originator |
| | Request Identifier - uniquely identifies a Request message |
| Operation dependent | Content - to be transferred |
| | Resource Type - of resource to be created |
| Optional | Originating Timestamp - when the message was built |
| | Request Expiration Timestamp - when the request message expires |
| | Result Expiration Timestamp - when the result message expires |
| | Operational Execution Time - the time when the specified operation is to be executed by the target CSE |
| | Response Type - type of response that shall be sent to the Originator |
| | Result Persistence - the duration for which the reference containing the responses is to persist |
| | Result Content - the expected components of the result |
| | Event Category - indicates how and when the system should deliver the message |
| | Delivery Aggregation - aggregation of requests to the same target CSE is to be used |
| | Group Request Identifier - Identifier added to the group request that is to be fanned out to each member of the group |
| | Group Request Target Members-indicates subset of members of a group |
| | Filter Criteria - conditions for filtered retrieve operation |
| | Desired Identifier Result Type - format of resource identifiers returned |
| | Token Request Indicator - indicating that the Originator may attempt Token Request procedure (for Dynamic Authorization) if initiated by the Receiver |
| | Tokens - for use in dynamic authorization |
| | Token IDs - for use in dynamic authorization |
| | Role IDs - for use in role based access control |
| | Local Token IDs - for use in dynamic authorization |
| | Authorization Signature Indicator - for use in Authorization Relationship Mapping |
| | Authorization Signature - for use in Authorization Relationship Mapping |
| | Authorization Relationship Indicator - for use in Authorization Relationship Mapping |
| | Semantic Query Indicator - for use in semantic queries |
| | Release Version Indicator - the oneM2M release version that this request message conforms to. |
| | Vendor Information |

A normal resource includes a complete set of representations of data constituting the base of information to be managed. Unless qualified as either "virtual" or "announced", the resource types in the present document are normal resources. A virtual resource is used to trigger processing and/or a retrieve result. However, a virtual resource does not have a permanent representation in a CSE. An announced resource contains a set of attributes of an original resource. When an original resource changes, an announced resource is automatically updated by the hosting CSE of the original resource. The announced resource contains a link to the original resource. Resource announcement enables resource discovery. An announced resource at a remote CSE may be used to create a child resource at a remote CSE, which is not present as a child of an original resource or is not an announced child thereof.

To support resource announcement, an additional column in a resource template may specify attributes to be announced for inclusion in an associated announced resource type. For each announced <resourceType>, the addition of suffix "Annc" to the original <resourceType> may be used to indicate its associated announced resource type. For example, resource <containerAnnc> may indicate the announced resource type for <container> resource, and <groupAnnc> may indicate the announced resource type for <group> resource.

The present disclosure relates to a method and device for calibrating an IoT device by using machine learning in an M2M system. In the case of IoT sensors used in various devices such as autonomous vehicles and smart factories, periodic inspection is required to verify that the required accuracy is continuously maintained. Many IoT sensors are difficult to calibrate and maintain on a regular basis, because their working environments are different. Generally, environmental factors such as solar radiation, humidity, wind speed and rainfall affect temperature measurement using low-cost temperature sensors. Herein, the low-cost temperature sensor may be a sensor that requires periodic calibration for accurate measurement. Such environmental factors and the wear of sensor may cause a problem to a low-cost temperature sensor that lacks radiation shielding or a forced suction system and thus is exposed to direct sunlight and condensation. In addition, drift is a natural phenomenon to a sensor. Herein, drift may be a phenomenon that generates an error. Such drift affects every sensor irrespective of manufacturers. Drift may be caused by a physical change of a sensor. Drifting of a sensor starts as soon as the sensor leaves a factory. Drift of a sensor is a slow process. Drift that exceeds an allowable error of a sensor may occur even before a next calibration. In this case, measured values of nearby other sensors, which perform a same operation, may be used to check whether or not an IoT sensor is operating normally. For example, when identical sensors are redundantly installed in a mine, a farm, or a machine, a device may generate more data to be used for machine learning. Specifically, learning is possible by using measured values of nearby sensors, an aging or error condition of an IoT sensor may be detected and prevented by changing settings to maintain the accuracy of measured values of the sensor.

Accordingly, the present disclosure describes various embodiments for detecting and preventing aging or error conditions of sensors. That is, the present disclosure proposes a technology for continuous IoT sensor calibration. To this end, the present disclosure may use machine learning. In the present disclosure, an IoT sensor may be referred to as 'IoT device' or another term with an equivalent technical meaning.

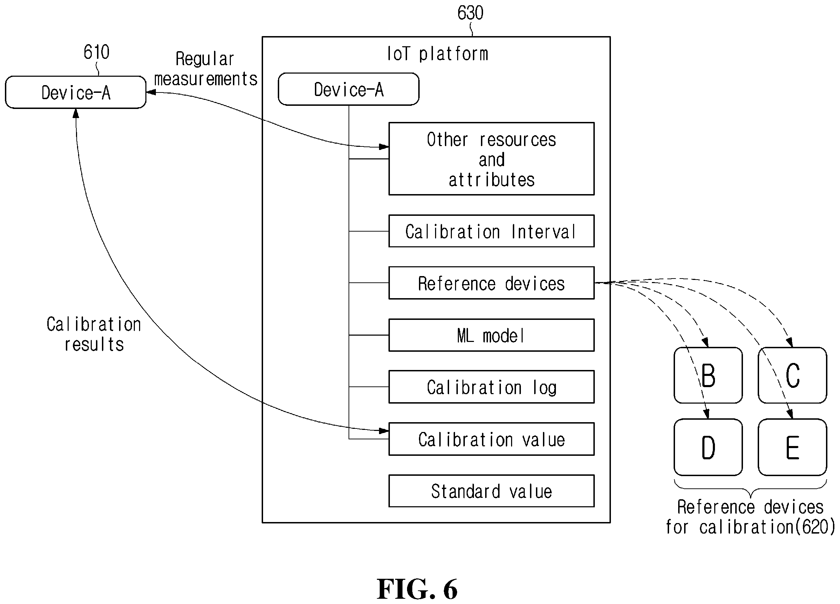

FIG. 6 illustrates a platform for calibration of an Internet of Things (IoT) device in an M2M system according to the present disclosure. An IoT platform 630 may perform machine learning that generates a calibration value for an IoT device 610 by using data that are collected from reference devices 620 for a predetermined time. That is, measured values generated from the reference devices 620 may become learning data for machine learning. Herein, the reference devices may be sensors that have high accuracy for generating a reference value.

An output value of machine learning, which is a result of machine learning using measured values generated from the reference devices 620, may be used to calibrate the IoT device 610. In other words, an output of machine learning for calibration may be used to calibrate an IoT device. In addition, a calibration device may also calibrate the IoT device 610 by using an output value of machine learning. In case the IoT device 610 regularly requires calibration or a measured value deviates from a standard value, the IoT platform 630 may continuously perform machine learning for calibration. Herein, the IoT device may use an output value of machine learning to change a setting so that the measured value of the IoT device may approximate the standard value.

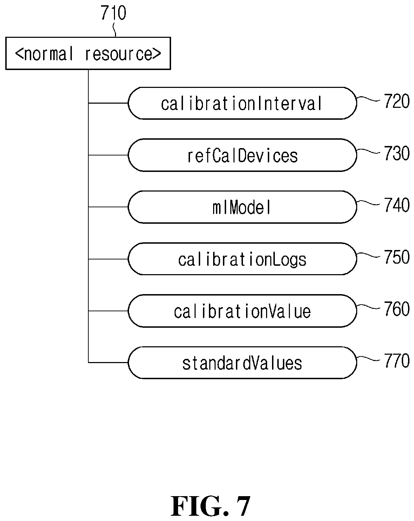

FIG. 7 illustrates resources necessary for calibration of an IoT device in an M2M system according to the present disclosure. Herein, the resources necessary for IoT device calibration include information that is generated and managed for calibration of an IoT device in an IoT platform. Referring to FIG. 7, a resource <normal resource> 710 includes a plurality of sub-resources or attributes related to IoT device calibration. For example, the plurality of sub-resources or attributes may include calibrationInterval 720, refCalDevices 730, mlModel 740, calibrationLogs 750, calibration Value 760, and standardValues 770.

calibrationInterval 720 indicates a time interval for performing machine learning for IoT device calibration. refCalDevices 730 includes a list of reference devices for performing machine learning. An IoT platform may use measured values of reference devices indicated by refCalDevices 730 as training data for IoT device calibration. mlModel 740 defines a machine learning model for IoT device calibration. An IoT platform may use mlModel 740 to perceive which machine learning model is to be used. For example, mlModel 740 may include parameters (e.g., a structure, weights) of a machine learning model or include identification information of a machine learning model. calibrationLogs 750 provides information regarding when an IoT platform performed calibration previously. That is, calibrationLogs 750 includes history information for calibration. calibrationLogs 750 may include time values for previous times when calibration was performed or include time interval values. calibration Value 760 stores a result of machine learning for calibration. An IoT platform may store a result value indicated by calibration Value 760. Accordingly, an IoT device may use a stored result value for calibration until next calibration. standardValues 770 indicates an acceptable value for measurement of an IoT device. That is, standardValues 770 indicates a standard value that becomes a criterion of a measured value of an IoT device.

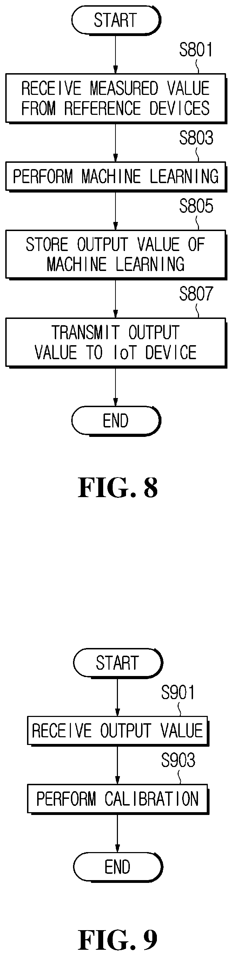

FIG. 8 illustrates an example of a procedure for performing calibration for a device in an M2M system according to the present disclosure. An operating agent of FIG. 8 may be a device (e.g. CSE) for managing a resource. In the description below, the operating agent of FIG. 8 will be referred to as 'device'.

Referring to FIG. 8, at step S801, a device may receive a measured value from reference devices. Specifically, in case a machine learning time interval indicated by calibrationInterval arrives or a measured value of an IoT device deviates from a standard value, the device may receive a measured value from at least one reference device. Herein, at least one reference device may be a reference device indicated by refCalDevices. In addition, the standard value may be a measured value that is a criterion in a device. In addition, the standard value may be a value that enables a measured value of a sensor to be received as a value within a normal range or a typical range. The normal range or the typical range may be different according to each sensor.

At step S803, the device may perform machine learning. Herein, the performing of the machine learning may be a learning process using learning data, and the present disclosure is not limited thereto. Specifically, the device may use the measured values of the reference devices received at step S801 as learning data of the machine learning. Accordingly, as a result of the machine learning, the device may acquire an output value. Herein, the output value may be used to calibrate an IoT device that needs calibration.

According to another embodiment of the present disclosure, in case another calibration (hereinafter referred to as `first calibration') is performed before calibration is performed, an output value generated for the first calibration and measured values of reference devices may be used as learning data of machine learning. In this case, the device may use a result value (calibrated value) from the first calibration as learning data. The present disclosure may use various learning data for machine learning. In addition, in case previous calibration is performed in multiple times, information on the calibration performed in multiple times may all be used as learning data, and a limit of times or duration may be put on a range and only calibration information within the range may be used as learning data.

At step S805, the device may store an output value of machine learning. That is, the device may store the output value derived through machine learning at step S803 in the device. The output value thus stored may be used as learning data for machine learning that is to be performed later.

At step S807, the device may transmit an output value to an IoT device. Specifically, the device may transmit the output value of machine learning stored at step S805 to the IoT device. Accordingly, the IoT device receiving the output value may perform calibration using the output value. For example, the device may change a setting by the output value so that a measured value of the IoT device approximates a standard value, and the present disclosure is not limited thereto.

FIG. 9 illustrates an example of a procedure for performing calibration by an IoT device in an M2M system. Specifically, it may be a procedure of performing calibration a result value of machine learning by an IoT device after performing the machine learning.

Referring to FIG. 9, at step S901, an IoT device may receive an output value. Herein, the output value may be a result value that is acquired by performing machine learning. Next, at step S903, the IoT device may perform calibration. That is, the IoT device may calibrate a sensor by using the output value that is received at step S901. Specifically, the IoT device may perform calibration when a measured value of a sensor to be calibrated deviates from a range of standard value. Alternatively, the IoT device may periodically perform calibration. Herein, the IoT device may perform calibration by applying a formula to a measured value. For example, the IoT device may add or subtract an output value to or from a measured value, and various formulas may also be applied. Herein, the various formulas may be preset formulas.

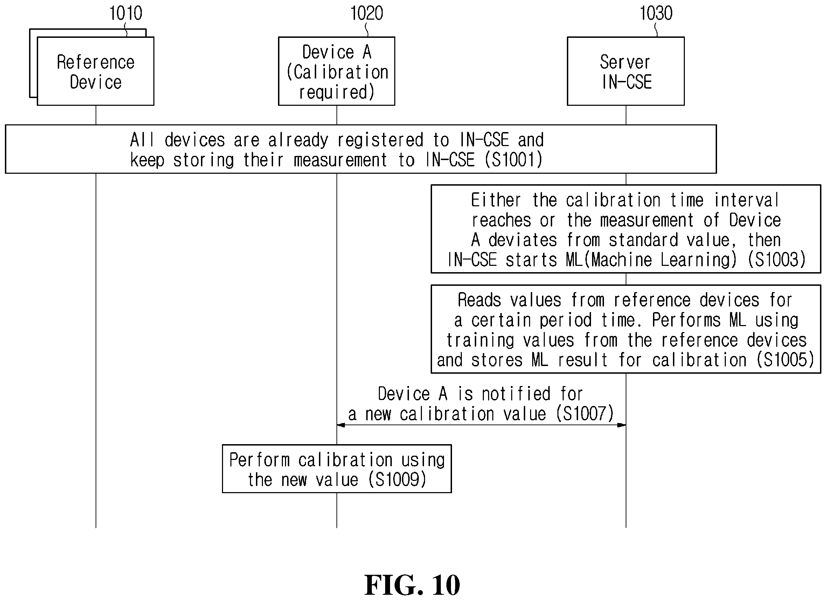

FIG. 10 illustrates an example of a calibration procedure using machine learning in an M2M system according to the present disclosure. FIG. 10 exemplifies signal exchange among reference sensors 1010, an IoT sensor (Device A) 1020, and a server IN-CSE 1030. Herein, the reference sensors 1010 may be at least one sensor. In addition, the IoT sensor may be a sensor that needs to be calibrated.

Referring to FIG. 10, at step S1001, the reference sensors 1010 may transmit a measured value to the server IN-CSE 1030. In addition, the IoT sensor 1020 may also transmit a measured value to the server IN-CSE 1030. The server IN-CSE 1030, which receives measured values from the reference sensors 1010 and the IoT sensor 1020, may store the received measured values.

At step S1003, if a calibration time interval arrives or a measured value of the IoT sensor 1020 deviates from a range of standard value, the server IN-CSE 1030 may perform machine learning. Herein, the calibration time interval may be a cycle at which calibration of the IoT sensor 1020 is performed.

At step S1005, the server IN-CSE 1030 may check measured values of the reference sensors 1010. The server IN-CSE 1030 may perform machine learning by using the checked measured values of the reference sensors 1010. That is, the server IN-CSE 1030 may use the measured values of the reference sensors 1010 as learning data of machine learning. In addition, the server IN-CSE 1030 may store an output value of machine learning.

At step S1007, the server IN-CSE 1030 may transmit the output value to the IoT sensor 1020. Herein, the output value may be called a new calibration value. That is, the server IN-CSE 1030 may transmit the new calibration value to the IoT sensor 1020. Accordingly, at step S1009, the IoT sensor 1020, which receives the new calibration value, may perform calibration. That is, the IoT sensor 1020 may calibrate the output value by using the new calibration value.

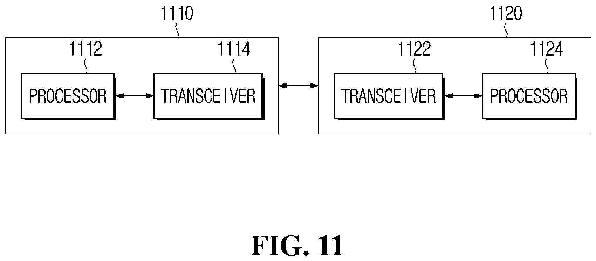

FIG. 11 illustrates a configuration of an M2M device in an M2M system according to the present disclosure. An M2M device 1110 or an M2M device 1120 illustrated in FIG. 11 may be understood as hardware functioning as at least one among the above-described AE, CSE and NSE.

Referring to FIG. 11, the M2M device 1110 may include a processor 1112 controlling a device and a transceiver 1114 transmitting and receiving a signal. Herein, the processor 1112 may control the transceiver 1114. In addition, the M2M device 1110 may communicate with another M2M device 1120. The another M2M device 1120 may also include a processor 1122 and a transceiver 1124, and the processor 1122 and the transceiver 1124 may perform the same function as the processor 1112 and the transceiver 1114.

As an example, the originator, the receiver, AE and CSE, which are described above, may be one of the M2M devices 1110 and 1120 of FIG. 11, respectively. In addition, the devices 1110 and 1120 of FIG. 11 may be other devices. As an example, the devices 1110 and 1120 of FIG. 11 may be communication devices, vehicles, or base stations. That is, the devices 1110 and 1120 of FIG. 11 refer to devices capable of performing communication and are not limited to the above-described embodiment.

The above-described exemplary embodiments of the present disclosure may be implemented by various means. For example, the exemplary embodiments of the present disclosure may be implemented by hardware, firmware, software, or a combination thereof.

The foregoing description of the exemplary embodiments of the present disclosure has been presented for those skilled in the art to implement and perform the disclosure. While the foregoing description has been presented with reference to the preferred embodiments of the present disclosure, it will be apparent to those skilled in the art that various modifications and variations can be made in the present disclosure without departing from the spirit or scope of the present disclosure as defined by the following claims.

Accordingly, the present disclosure is not intended to be limited to the exemplary embodiments shown herein but is to be accorded the widest scope consistent with the principles and novel features disclosed herein. In addition, while the exemplary embodiments of the present specification have been particularly shown and described, it is to be understood that the present specification is not limited to the above-described exemplary embodiments, but, on the contrary, it will be understood by those skilled in the art that various changes and modifications may be made without departing from the spirit and scope of the present specification as defined by the claims below, and such changes and modifications should not be individually understood from the technical thought and outlook of the present specification.

In this specification, both the disclosure and the method disclosure are explained, and the description of both disclosures may be supplemented as necessary. In addition, the present disclosure has been described with reference to exemplary embodiments thereof. It will be understood by those skilled in the art that various changes in form and details may be made therein without departing from the essential characteristics of the present disclosure. Therefore, the disclosed exemplary embodiments should be considered in an illustrative sense rather than in a restrictive sense. The scope of the present disclosure is defined by the appended claims rather than by the foregoing description, and all differences within the scope of equivalents thereof should be construed as being included in the present disclosure.

## Claims

1. A method for calibrating an Internet of Things (IoT) device in a machine-to-machine (M2M) system, the method comprising:
receiving a measured value from at least one reference device;
performing machine learning by using the measured value;
storing an output value of the machine learning; and
transmitting the output value to an IoT device for IoT device calibration.

2. The method of claim 1, further comprising:
determining whether or not the IoT device needs calibration.

3. The method of claim 2, wherein whether or not the IoT device needs calibration is determined based on a calibration time interval.

4. The method of claim 2, wherein whether or not the IoT device needs calibration is determined based on a standard value.

5. The method of claim 4, wherein whether or not the IoT device needs calibration is determined based on a degree to which a measured value of the IoT device deviates from a range of the standard value.

6. The method of claim 1, further comprising:
generating a resource including information related to calibration of the IoT device.

7. The method of claim 6, wherein the resource includes at least one of first information indicating a time interval for performing machine learning for the calibration of the IoT device, second information indicating a reference device list for the calibration of the IoT device, third information indicating a machine learning model used for the calibration of the IoT device, fourth information indicating information on machine learning that is performed previously, fifth information indicating an output value of machine learning, or sixth information indicating a standard value that is a criterion for the measured value of the IoT device.

8. An apparatus for calibrating an Internet of Things (IoT) device in a machine-to-machine (M2M) system, the apparatus comprising:
a transceiver; and
a processor coupled with the transceiver,
wherein the processor is configured to:
receive a measured value from at least one reference device,
perform machine learning by using the measured value,
store an output value of the machine learning, and
transmit the output value to an IoT device for IoT device calibration.

9. The apparatus of claim 8, wherein whether or not the IoT device needs calibration is determined.

10. The apparatus of claim 9, wherein whether or not the IoT device needs calibration is determined based on a calibration time interval.

11. The apparatus of claim 9, wherein whether or not the IoT device needs calibration is determined based on a standard value.

12. The apparatus of claim 11, wherein whether or not the IoT device needs calibration is determined based on a degree to which a measured value of the IoT device deviates from a range of the standard value.

13. The apparatus of claim 8, wherein a resource including information related to calibration of the IoT device is generated.

14. The apparatus of claim 13, wherein the resource includes at least one of first information indicating a time interval for performing machine learning for the calibration of the IoT device, second information indicating a reference device list for the calibration of the IoT device, third information indicating a machine learning model used for the calibration of the IoT device, fourth information indicating information on machine learning that is performed previously, fifth information indicating an output value of machine learning, or sixth information indicating a standard value that is a criterion for the measured value of the IoT device.
